# EUROPEAN PATENT APPLICATION

(11) **EP 4 338 873 A1**
(43) Date of publication of application: **20.03.2024**
(21) Application number: 22195336.7
(22) Date of filing: 13.09.2022
(51) Int. Cl.: B23C 5/06, B23C 5/20

(54) **DOUBLE-SIDED NEGATIVE CUTTING INSERT AND MILLING TOOL**

(71) Applicant: AB Sandvik Coromant, 811 81 Sandviken (SE)
(72) Inventor: Sunnvius, Ulrik, 811 81 Sandviken (SE); Lehto, Rolf, 811 81 Sandviken (SE)
(74) Representative: Sandvik

(57) **Abstract**

A double-sided negative cutting insert for use in milling with quadratic basic shape and eight different working positions. The cutting insert (1) comprises a peripheral surface (10), which extends around the cutting insert between first and second major faces (2, 3) and has four main side faces (11a-11d). One main cutting edge and one surface-wiping cutting edges are formed at an intersection between each main side face and the first major face (2) and at an intersection between each main side face and the second major face (3). Each main side face comprises a first lateral side surface (13), a central side surface (14) and a second lateral side surface (15) arranged one after the other between two corner side faces (12) with the central side surface (14) located between the first and second lateral side surfaces (13, 15), wherein the central side surface is slightly depressed in relation to the adjacent first and second lateral side surfaces.

## Description

### FIELD OF THE INVENTION AND PRIOR ART

The present invention relates to a double-sided negative cutting insert for milling according to the preamble of claim 1. The invention also relates to a milling tool comprising such a double-sided negative cutting insert.

A milling tool is a rotating cutting tool, which may be provided with one or more cutting inserts detachably mounted in a respective insert seat in a tool body of the milling tool. One type of cutting insert that may be used in square-shoulder milling and face milling is a double-sided negative cutting insert with an essentially quadratic basic shape of the type defined in the preamble of claim 1. A cutting insert of this type is previously known from US 6 336 776 B1 and is turnable into eight different working positions, wherein four working positions are provided by four different sets of cutting edges formed at an interface between a peripheral surface and a first major face of the cutting insert and four further working positions are provided by four other different sets of cutting edges formed at an interface between the peripheral surface and a second major face of the cutting insert, wherein each such set of cutting edges comprises a main cutting edge and a surface-wiping cutting edge with an intermediate curved corner cutting edge. When a cutting edge included in one such set of cutting edges has been worn out, the cutting insert may be repositioned in its insert seat and mounted in a new working position with another one of the different sets of cutting edges in an active cutting position.

A double-sided negative cutting insert of the above-mentioned type offers a large number of different working positions and may be produced in a comparatively simple and cost-efficient manner. Since the cutting insert has a negative shape, the cutting insert has to be given a negative axial tipping-in angle and a negative radial tipping-in angle when mounted in an insert seat in a tool body of a milling tool, which implies that the cutting insert has to be tipped in axially forwardly and radially outwardly in the tool body to get a clearance. The negative axial tipping-in angle is necessary in order to create relief behind the active surface-wiping cutting edge and the negative radial tipping-in angle is necessary in order to create relief behind the active main cutting edge. As a consequence of the negative axial tipping-in angle, the cutting process is heavier as it is more difficult for the cutting insert to cut as compared to a corresponding cutting process performed with a cutting insert having a positive axial tipping-in angle. To counteract the negative effect of the axial tipping-in angle, each main cutting edge is given a downward slope in a direction away from the corner cutting edge that interconnects the main cutting edge with the associated surface-wiping cutting edge. This downward slope of the main cutting edge will, in combination with the axial negative tipping-in angle and the radial negative tipping-in angle, have the effect that the entering angle in the workpiece is always slightly smaller than 90°. It is desirable to make the entering angle approach the 90° value as much as possible.

### OBJECT OF THE INVENTION

The object of the present invention is to provide a double-sided negative cutting insert of the above-mentioned type that has a new and favourable design.

### SUMMARY OF THE INVENTION

According to the invention, said object is achieved by means of a double-sided negative cutting insert having the features defined in claim 1.

The double-sided negative cutting insert according to the invention has an essentially quadratic basic shape and is turnable into eight different working positions and comprises:
- first and second major faces arranged on opposite sides of the cutting insert and serving as top and bottom faces of the cutting insert, wherein the cutting insert has a centre axis that extends between the first and second major faces and a median plan that extends halfway between the first and second major faces perpendicularly to the centre axis, and wherein the cutting insert has 90° rotational symmetry about the centre axis;
- a peripheral surface extending around the cutting insert between the first and second major faces substantially perpendicularly to the median plane and comprising:
   - four main side faces, a first pair of which being arranged opposite to each other on two opposite sides of the cutting insert and a second pair of which being arranged opposite to each other on two other opposite sides of the cutting insert, wherein the cutting insert has a first transverse plane that extends halfway between the two main side faces in said first pair and contains the centre axis of the cutting insert and a second transverse plane that extends halfway between the two main side faces in said second pair and contains the centre axis of the cutting insert, and wherein each main side face in said first pair has 180° rotational symmetry about a first imaginary reference axis that extends along a line of intersection between the median plane and the second transverse plane and each main side face in said second pair has 180° rotational symmetry about a second imaginary reference axis that extends along a line of intersection between the median plane and the first transverse plane, and
   - four corner side faces, each of which being arranged between two adjacent main side faces;
- four first main cutting edges formed at an intersection between a respective one of the four main side faces and the first major face;
- four second main cutting edges formed at an intersection between a respective one of the four main side faces and the second major face;
- four first surface-wiping cutting edges formed at an intersection between a respective one of the four main side faces and the first major face;
- four second surface-wiping cutting edges formed at an intersection between a respective one of the four main side faces and the second major face;
- four first curved corner cutting edges formed at an intersection between a respective one of the four corner side faces and the first major face, wherein each one the first curved corner cutting edges is located between one of the first main cutting edges and one of the first surface-wiping cutting edges; and
- four second curved corner cutting edges formed at an intersection between a respective one of the four corner side faces and the second major face, wherein each one the second curved corner cutting edges is located between one of the second main cutting edges and one of the second surface-wiping cutting edges.

As mentioned above, the peripheral surface extends between the first and second major faces substantially perpendicularly to the median plane, i.e. perpendicularly within manufacturing tolerances, which implies that each part of the peripheral surface is perpendicular to the median plane within manufacturing tolerances.

Each one of the main side faces comprises a central side surface that extends between the first and second major faces, a first lateral side surface that extends between the first and second major faces and adjoins to one of the four corner side faces and a second lateral side surface that extends between the first and second major faces and adjoins to another one of the four corner side faces, the first lateral side surface, the central side surface and the second lateral side surface being arranged one after the other with the central side surface located between the first lateral side surface and the second lateral side surface, wherein:
- one of the first main cutting edges extends along the first lateral side surface and along at least a major part of the central side surface,
- one of the first surface-wiping cutting edges extends along at least a part of the second lateral side surface,
- one of the second main cutting edges extends along the second lateral side surface and along at least a major part of the central side surface, and
- one of the second surface-wiping cutting edges extends along at least a part of the first lateral side surface.

When seen in a cross-section of the cutting insert taken along the median plane, each one of the main side faces is arranged such that the first lateral side surface of the main side face extends along a first line, the central side surface of the main side face extends along a second line and the second lateral side surface of the of the main side face extends along a third line, wherein:
- the second line has a first end point, through which the second line adjoins to the first line, and a second end point, through which the second line adjoins to the third line, these first and second end points being located on an imaginary straight reference line that extends between a first point where the first line adjoins to the corner side face adjacent to the first lateral side surface of the main side face and a second point where the third line adjoins to the corner side face adjacent to the second lateral side surface of the main side face,
- the second line is depressed in relation to the imaginary straight reference line toward the centre axis of the cutting insert and has a deepest part at its middle part, and
- a depth of the second line in relation to the imaginary straight reference line is gradually increasing as seen in a direction from said first end point to the deepest part of the second line and as seen in a direction from said second end point to the deepest part of the second line, the depth of the deepest part of the second line in relation to the imaginary straight reference line being 0,01-0,15 mm, preferably 0,01-0,10 mm.

It has turned out that the above-mentioned design of the double-sided negative cutting insert with a slightly depressed central side surface on each main side face implies that the entering angle, at least for a major part of the cutting depth interval normally used, comes closer to the desired 90° value as compared to a corresponding double-sided negative cutting insert with conventional planar main side faces.

As a consequence of the symmetry of the cutting insert, the deepest part of the central side surface of each main side face will be centrally located between the first and second lateral side surfaces of the main side face.

When the double-sided negative cutting insert is in a working position with one of the first surface-wiping cutting edges in an active surface wiping position, an inactive first main cutting edge on the same main side face as the active first surface-wiping cutting edge will be moved closely above a machined workpiece surface that is levelled by this first surface-wiping cutting edge. In a corresponding manner, when the double-sided negative cutting insert is in a working position with one of the second surface-wiping cutting edges in an active surface wiping position, an inactive second main cutting edge on the same main side face as the active second surface-wiping cutting edge will be moved closely above a machined workpiece surface that is levelled by this second surface-wiping cutting edge. There has to be a proper clearance between said inactive first or second main cutting edge and the workpiece surface in order to prevent small fragments of workpiece material from getting stuck between the inactive main cutting edge and the workpiece surface and thereby subject the inactive main cutting edge to small damages. This clearance is slightly improved along the depressed central side surface of the main side face facing the workpiece surface, which will reduce the risk of damages to said inactive main cutting edge.

In each working position of the double-sided negative cutting insert, one of the four main side faces of the cutting insert abuts against a radial support surface in an insert seat in a tool body of a milling tool and another one of the four main side faces of the cutting insert abuts against an axial support surface in the insert seat. The design of the main side faces with a depressed central side surface on each main side face between a first lateral side surface and a second lateral side surface implies that the first and second lateral side surfaces of the main side face facing the radial support surface in an insert seat may jointly serve as two mutually spaced apart radial abutment surfaces of the cutting insert and that the first and second lateral side surfaces of the main side face facing the axial support surface in an insert seat may jointly serve as two mutually spaced apart axial abutment surfaces of the cutting insert, which provides for good stability of the cutting insert in radial and axial directions when mounted in an insert seat. The mutually spaced apart radial abutment surfaces with the intermediate depressed central side surface and the mutually spaced apart axial abutment surfaces with the intermediate depressed central side surface will also have the effect that there is less sensitivity with respect to dust and other small particles that may remain on the main side faces facing the radial and axial support surfaces in the insert seat.

The above-mentioned centre axis of the cutting insert extends between a centre point of the first major face and a centre point of the second major face. By a centre point is meant a centroid or a geometric centre. The cutting insert may be provided with a through hole, which extends centrally through the cutting insert between the first and second major faces, wherein a centre axis of the through hole coincides with the centre axis of the cutting insert.

The double-sided negative cutting insert according to the present invention may have the form of a square-shoulder milling insert or a face milling insert.

Each one of the main side faces preferably has such a shape that the central side surface of the main side face is tangentially connected to the first lateral side surface of the main side face and tangentially connected to the second lateral side surface of the main side face, which implies that there is a smooth transition from each lateral side surface to the adjacent central side surface. According to an embodiment of the invention, each main side face in said first pair preferably has such a shape that the central side surface of this main side face, as seen in a lateral view of the cutting insert along the first imaginary reference axis toward this main side face, has a length along the median plane corresponding to 35-75%, preferably 45-65%, of a width of the cutting insert as seen in this lateral view and measured along the median plane. It follows from the symmetry of the cutting insert that the central side surface of each main side face in said second pair has a length corresponding to the length of the central side surface of each main side face in the first pair.

Another embodiment of the invention is characterized in:
- that the first lateral side surface of each main side face has such a shape that at least a part of said first line protrudes outwards from the associated imaginary straight reference line, wherein a height of a highest part of the first line in relation to the associated imaginary straight reference line is 0,001-0,02 mm, and wherein this highest part is provided on a convex part of the associated first lateral side surface; and
- that the second lateral side surface of each main side face has such a shape that at least a part of said third line protrudes outwards from the associated imaginary straight reference line, wherein a height of a highest part of the third line in relation to the associated imaginary straight reference line is 0,001-0,02 mm, and wherein this highest part is provided on a convex part of the associated second lateral side surface.

In this case, the above-mentioned radial and axial abutment surfaces of the cutting insert are formed by the highest parts of the first and second lateral side surfaces of the main side faces facing the radial and axial support surfaces in the insert seat. Due to the convexity of these highest parts of the first and second lateral side surfaces, the requirements with respect to the tolerances of the first and second lateral side surfaces of the main side faces are reduced. The radius of curvature of said convex part of the first lateral side surface and the radius of curvature of said convex part of the second lateral side surface are with advantage at least 25 mm, preferably 25-600 mm, and more preferably 40-100 mm. A suitable radius of curvature of these convex parts may furthermore or as an alternative be defined in relation to the size of the cutting insert. In this case, the radius of curvature of said convex part of the first lateral side surface and the radius of curvature of said convex part of the second lateral side surface are with advantage 2-10 times, preferably 3-7 times, larger that a width of the cutting insert, wherein the width of the cutting insert is measured along the median plane in a lateral view of the cutting insert seen along the first imaginary reference axis.

Another embodiment of the invention is characterized in:
- that the second surface-wiping cutting edge associated with the first lateral side surface of each main side face extends at least along a part of said convex part of this first lateral side surface and preferably beyond said highest part of this first lateral side surface; and
- that the first surface-wiping cutting edge associated with the second lateral side surface of each main side face extends at least along a part of said convex part of this second lateral side surface and preferably beyond said highest part of this second lateral side surface.

The first and second lateral side surfaces of each main side face may as an alternative be planar such that the above-mentioned first and third lines are both flush with the associated imaginary straight reference line.

According to another embodiment of the invention, the central side surface of each main side face has at least one concave part that is concavely shaped as seen in a cross-section of the cutting insert taken along the median plane (MP). The radius of curvature of said concave part is with advantage 25-200 mm, preferably 50-170 mm. A suitable radius of curvature of this concave part may furthermore or as an alternative be defined in relation to the size of the cutting insert. In this case, the radius of curvature of said concave part is with advantage 2-16 times, preferably 3-13 times, larger that a width of the cutting insert , wherein the width of the cutting insert is measured along the median plane in a lateral view of the cutting insert seen along the first imaginary reference axis.

Another embodiment of the invention is characterized in:
- that each first surface-wiping cutting edge extends along at least a major part of the associated second lateral side surface; and
- that each second surface-wiping cutting edge extends along at least a major part of the associated first lateral side surface.

According to another embodiment of the invention, each main side face in said first pair has such a shape:
- that the first main cutting edge associated with this main side face, as seen in a lateral view of the cutting insert along the first imaginary reference axis toward this main side face, is inclined inwards toward the median plane as seen in a direction from a first end of this first main cutting edge located at an intersection between the first lateral side surface of this main side face and the first major face toward an opposite second end of this first main cutting edge; and
- that the second main cutting edge associated with this main side face, as seen in a lateral view of the cutting insert along the first imaginary reference axis toward this main side face, is inclined inwards toward the median plane as seen in a direction from a first end of this second main cutting edge located at an intersection between the second lateral side surface of this main side face and the second major face toward an opposite second end of this second main cutting edge.

This downward slope of the first and second main cutting edges will counteract the negative effect associated with the axial tipping-in angle required for a double-sided negative cutting insert. It follows from the symmetry of the cutting insert that each main side face in said second pair has shape corresponding to the shape of each main side face in the first pair.

According to another embodiment of the invention, each main side face in said first pair has such a shape:
- that the first main cutting edge associated with this main side face, as seen in a lateral view of the cutting insert along the first imaginary reference axis toward this main side face, is inclined inwards toward the median plane such that it approaches the median plane
   at least along a part of this first main cutting edge formed at an intersection between the first lateral side surface of this main side face and the first major face, and/or
   at least along a part of this first main cutting edge formed at an intersection between the central side surface of this main side face and the first major face,
   when moving from one corner side face of the four corner side faces that adjoins to the first lateral side surface of this main side face in a direction toward one corner side face of the four corner side faces that adjoins to the second lateral side surface of this main side face; and
- that the second main cutting edge associated with this main side face, as seen in a lateral view of the cutting insert along the first imaginary reference axis toward this main side face, is inclined inwards toward the median plane such that it approaches the median plane
   at least along a part of this second main cutting edge formed at an intersection between the second lateral side surface of this main side face and the second major face, and/or
   at least along a part of this second main cutting edge formed at an intersection between the central side surface of this main side face and the second major face,
   when moving from one corner side face of the four corner side faces that adjoins to the second lateral side surface of this main side face in a direction toward one corner side face of the four corner side faces that adjoins to the first lateral side surface of this main side face.

This downward slope of the first and second main cutting edges will counteract the negative effect associated with the axial tipping-in angle required for a double-sided negative cutting insert. It follows from the symmetry of the cutting insert that each main side face in said second pair has shape corresponding to the shape of each main side face in the first pair.

Another embodiment of the invention is characterized in:
- that each one of the first surface-wiping cutting edges extends essentially in parallel with the median plane; and
- that each one of the second surface-wiping cutting edges extends essentially in parallel with the median plane.

Thus, each first surface-wiping cutting edge has its extension in a plane that is essentially parallel to the median plane and each second surface-wiping cutting edge has its extension in another plane that is essentially parallel to the median plane.

Another embodiment of the invention is characterized in:
- that the first major face comprises a substantially flat first tangential abutment surface, wherein each first corner cutting edge, at least a part of each first surface-wiping cutting edge closest to the adjacent first corner cutting edge and at least a part of each first major cutting edge closest to the adjacent first corner cutting edge are arranged further from the median plane than the first tangential abutment surface; and
- that the second major face comprises a substantially flat second tangential abutment surface, wherein each second corner cutting edge, at least a part of each second surface-wiping cutting edge closest to the adjacent second corner cutting edge and at least a part of each second major cutting edge closest to the adjacent second corner cutting edge are arranged further from the median plane than the second tangential abutment surface.

Further advantageous features of the double-sided negative cutting insert according to the present invention will appear from the description following below.

The invention also relates to a milling tool comprising at least one double-sided negative cutting insert of the above-mentioned type. Further advantageous features of the milling tool according to the present invention will appear from the description following below.

### BRIEF DESCRIPTION OF THE DRAWINGS

With reference to the appended drawings, a specific description of embodiments of the invention cited as examples follows below. In the drawings:
- Figs 1a and 1b: are perspective views from different directions of a double-sided negative cutting insert according to an embodiment of the present invention,
- Fig 1c: is a lateral view of the cutting insert of Figs 1a and 1b seen along a first imaginary reference axis,
- Fig 1d: is a lateral view of the cutting insert of Figs 1a and 1b seen along a second imaginary reference axis,
- Fig 1e: is a plan view from above of the cutting insert of Figs 1a and 1b,
- Fig 1f: is a plan view from below of the cutting insert of Figs 1a and 1b,
- Fig 1g: is a cut according to the line Ig-Ig in Fig 1c,
- Fig 2: is a schematic illustration of a part of a double-sided negative cutting insert according to an embodiment of the invention,
- Fig 3: is a schematic illustration of a part of a double-sided negative cutting insert according to an alternative embodiment of the invention,
- Fig 4a: is a perspective view of a shim plate designed for use with the cutting insert of Figs 1a-1g,
- Fig 4b: is a lateral view of the shim plate of Fig 4a,
- Fig 5a: is a perspective view of a milling tool provided with cutting inserts according to the embodiment illustrated in Figs 1a-1g, as seen with one of the cutting inserts removed from its insert seat in the tool body of the milling tool,
- Fig 5b: is a detail enlargement of a portion of Fig 5a,
- Fig 5c: is a perspective view from another direction of the cutting insert and shim plate shown in Fig 5b,
- Fig 5d: is a plan view of the milling tool of Fig 5a,
- Fig 5e: is a lateral view of the milling tool of Fig 5a, and
- Fig 5f: is a detail enlargement of a portion of Fig 5e.

### DETAILED DESCRIPTION OF EMBODIMENTS OF THE INVENTION

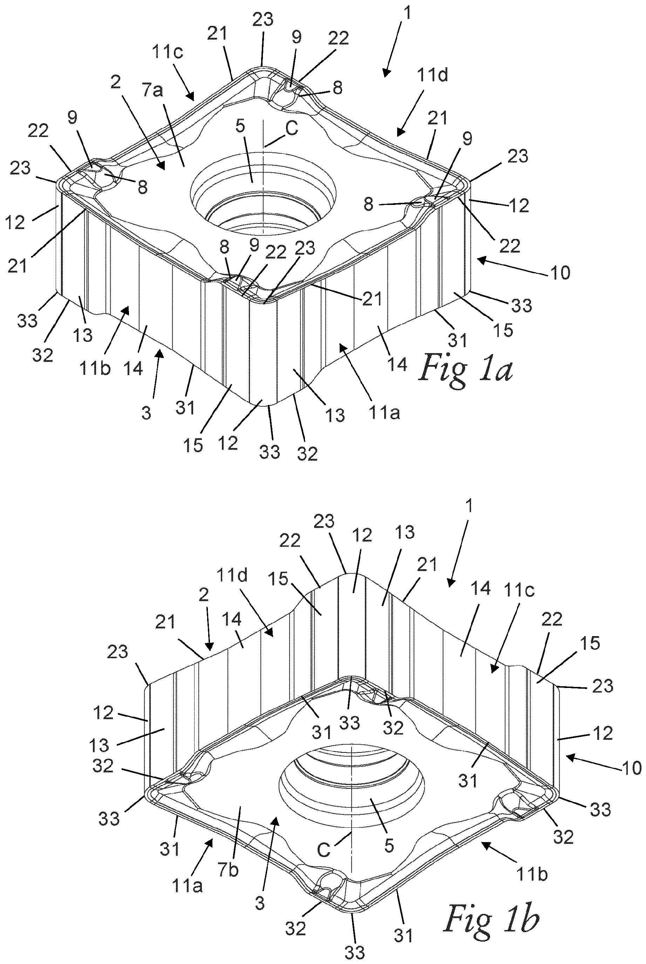

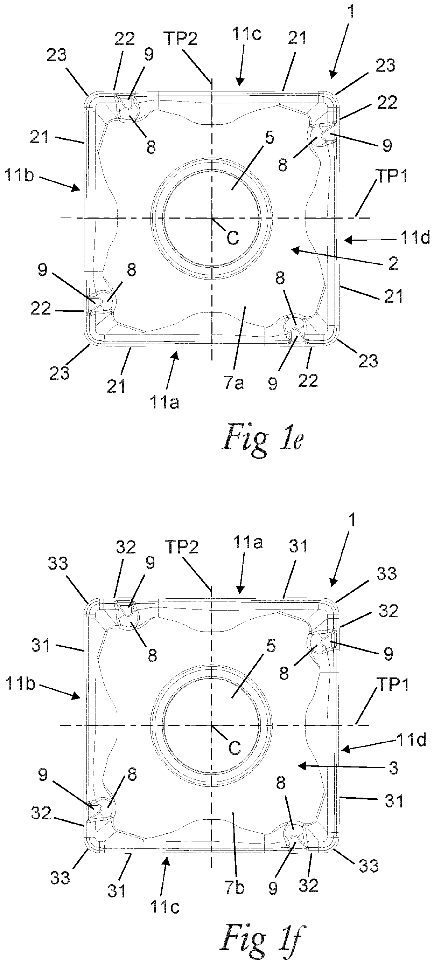

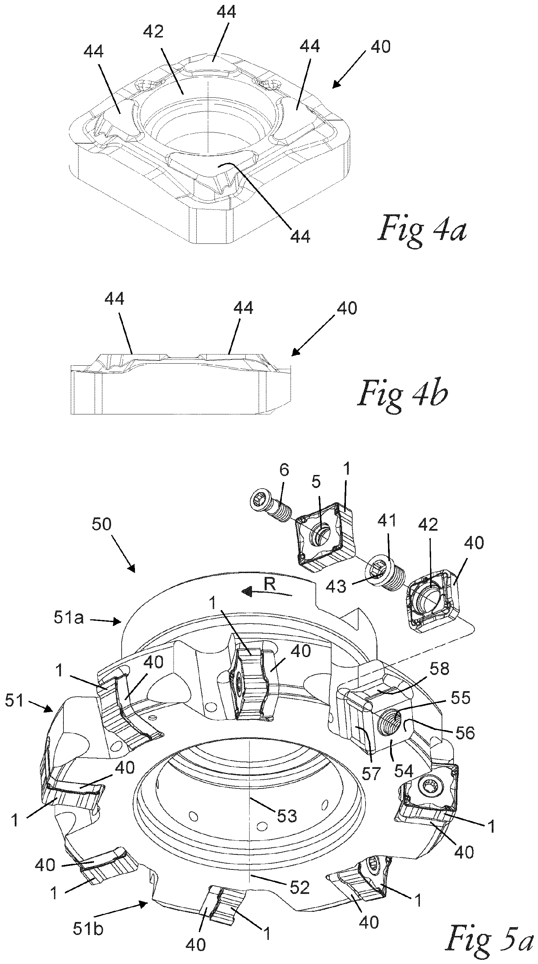

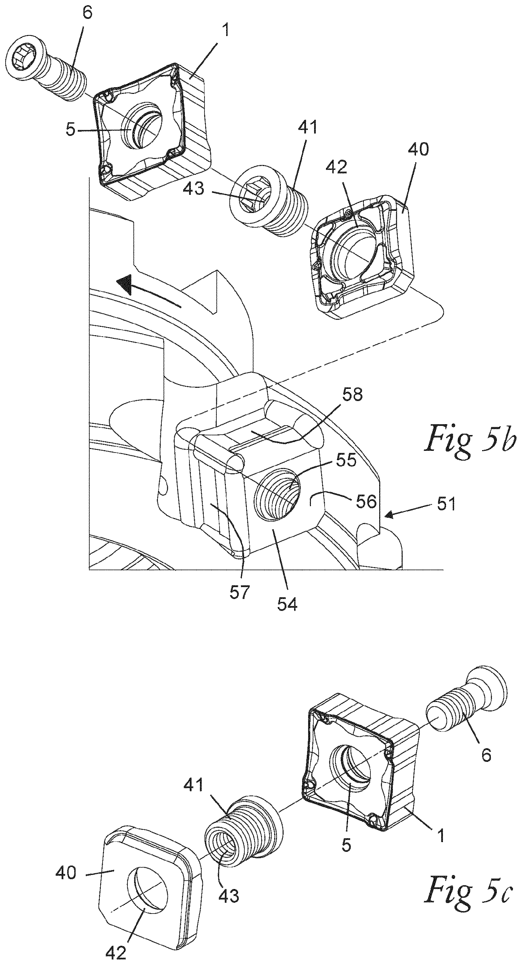

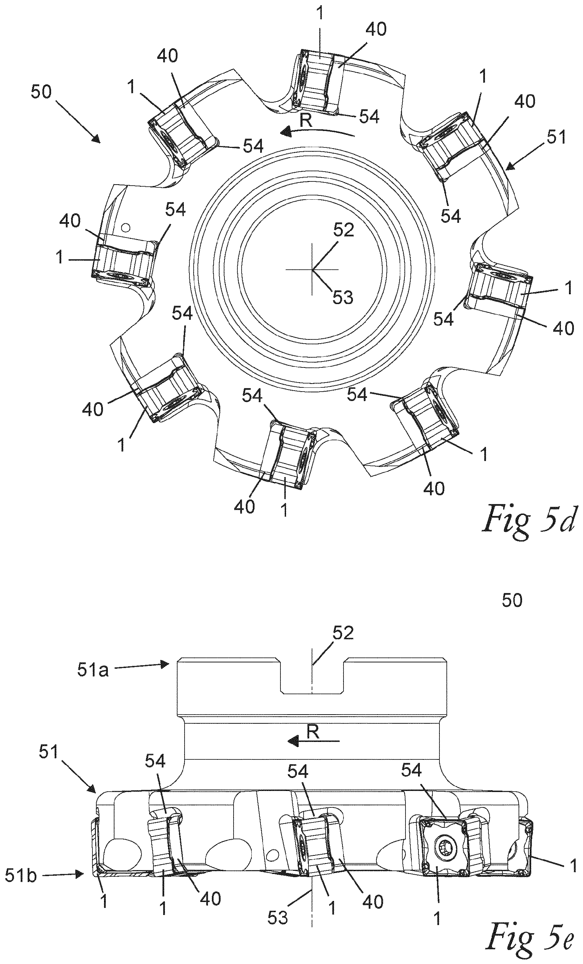

An embodiment of a double-sided negative cutting insert 1 according to the present invention is illustrated in Figs 1a-1g. The cutting insert 1 is configured for use in milling and is configured to be used in a milling tool, for instance a milling tool 50 of the type illustrated in Figs 5a-5e.

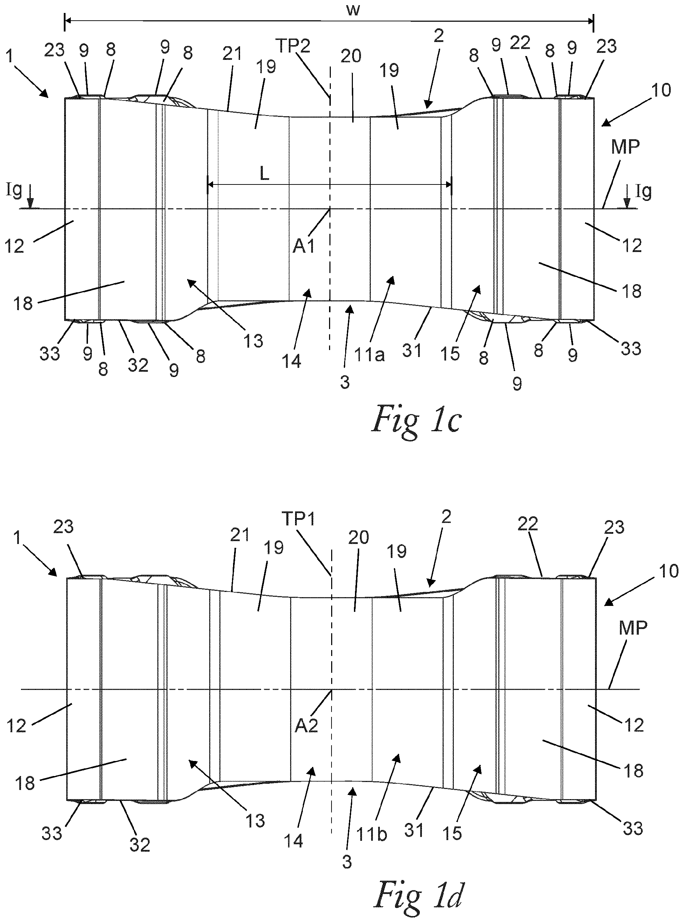

The cutting insert 1 has an essentially quadratic basic shape and is turnable into eight different working positions. The cutting insert 1 comprises a first major face 2 and a second major face 3 arranged on opposite sides of the cutting insert and serving as top and bottom faces of the cutting insert. The first and second major faces 2, 3 have an essentially quadratic shape, as seen in a plan view of the cutting insert 1. The cutting insert has a centre axis C, which extends between the first and second major faces 2, 3. A median plane MP, which constitutes an imaginary plane, extends halfway between the first and second major faces 2, 3 perpendicularly to the centre axis C, as illustrated in Figs 1c and 1d. The first and second major faces 2, 3 are, within manufacturing tolerances, identical to each other.

In the illustrated embodiment, the cutting insert 1 is provided with a through hole 5, which extends centrally through the cutting insert between the first and second major faces 2, 3. The through hole 5 is configured to receive a fastening element 6 (see Figs 5a-5c), for instance in the form of a screw, by means of which the cutting insert may be releasably fixed to an insert seat 54 of a milling tool 50. The centre axis C of the cutting insert 1 coincides with the centre axis of the through hole 5. The cutting insert 1 may as an alternative lack a through hole 5, wherein the cutting insert is configured to be releasably fixed to an insert seat of a milling tool by means of suitable clamping means.

A peripheral surface 10 extends around the cutting insert 1 between the first and second major faces 2, 3 perpendicularly to the median plane MP. The peripheral surface 10 comprises four main side faces 11a-11d and four corner side faces 12, wherein each corner side face 12 is located between two adjacent main side faces 11a-11d. The main side faces comprises a first pair of main side faces 11a, 11c located opposite to each other on two opposite sides of the cutting insert 1 and a second pair of main side faces 11b, 11d located opposite to each other on two other opposite sides of the cutting insert. Thus, the two main side faces 11a, 11c in said first pair are located opposite to each other on mutually opposite sides of the centre axis C of the cutting insert 1. In the corresponding manner, the two main side faces 11b, 11d in said second pair are located opposite to each other on mutually opposite sides of the centre axis C of the cutting insert 1. The four main side faces 11a-11d are, within manufacturing tolerances, identical to each other.

A first transverse plane TP1, which constitutes an imaginary plane, extends halfway between the two main side faces 11a, 11c in said first pair and contains the centre axis C of the cutting insert 1. A second transverse plane TP2, which also constitutes an imaginary plane, extends halfway between the two main side faces 11b, 11d in said second pair and contains the centre axis C of the cutting insert 1. The first and second transverse planes TP1, TP2 extend perpendicularly to each other and intersect each other along the centre axis C of the cutting insert 1. Each main side face 11a, 11c in said first pair has 180° rotational symmetry about a first imaginary reference axis A1 (see Fig 1c) that extends along a line of intersection between the median plane MP and the second transverse plane TP2 and each main side face 11b, 11d in said second pair has 180° rotational symmetry about a second imaginary reference axis A2 (see Fig 1d) that extends along a line of intersection between the median plane MP and the first transverse plane TP1.

The cutting insert 1 comprises the following cutting edges:
- four first main cutting edges 21 formed at an intersection between a respective one of the four main side faces 11a-11d and the first major face 2;
- four second main cutting edges 31 formed at an intersection between a respective one of the four main side faces 11a-11d and the second major face 3;
- four first surface-wiping cutting edges 22 formed at an intersection between a respective one of the four main side faces 11a-11d and the first major face 2;
- four second surface-wiping cutting edges 32 formed at an intersection between a respective one of the four main side faces 11a-11d and the second major face 3;
- four first curved corner cutting edges 23 formed at an intersection between a respective one of the four corner side faces 12 and the first major face 2, wherein each one the first curved corner cutting edges 23 is located between one of the first main cutting edges 21 and one of the first surface-wiping cutting edges 22; and
- four second curved corner cutting edges 33 formed at an intersection between a respective one of the four corner side faces 12 and the second major face 3, wherein each one the second curved corner cutting edges 33 is located between one of the second main cutting edges 31 and one of the second surface-wiping cutting edges 32.

The cutting edges 21, 22, 23 located along the periphery of the first main side face 2 form four different first sets of cutting edges, each such first set of cutting edges comprising one first main cutting edge 21, one first curved corner cutting edge 23 located adjacent to the first main cutting edge and one first surface-wiping cutting edge 22 located adjacent to the first curved corner cutting edge. The cutting edges 31, 32, 33 located along the periphery of the second main side face 3 form four different second sets of cutting edges, each such second set of cutting edges comprising one second main cutting edge 31, one second curved corner cutting edge 33 located adjacent to the second main cutting edge and one second surface-wiping cutting edge 32 located adjacent to the second curved corner cutting edge. Thus, the cutting insert 1 is in total provided with eight different sets of cutting edges, each of which comprising a main cutting edge 21, 31 and a surface-wiping cutting edge 22, 32 with an intermediate curved corner cutting edge 23, 33. In each one of the different working positions of the cutting insert 1, the cutting edges of one of the eight different sets of cutting edges constitute the active cutting edges of the cutting insert.

Each one of the main side faces 11a-11d comprises a central side surface 14 that extends between the first and second major faces 2, 3, a first lateral side surface 13 that extends between the first and second major faces 2, 3 and adjoins to one of the four corner side faces 12 and a second lateral side surface 15 that extends between the first and second major faces 2, 3 and adjoins to another one of the four corner side faces 12, the first lateral side surface 13, the central side surface 14 and the second lateral side surface 15 being arranged one after the other with the central side surface 14 located between the first lateral side surface 13 and the second lateral side surface 15. The central side surface 14 adjoins to the first lateral side surface 13 at a first end and to the second lateral side surface 15 at an opposite second end. One of the first main cutting edges 21 extends along the first lateral side surface 13 and along at least a major part of the adjacent central side surface 14, one of the first surface-wiping cutting edges 22 extends along at least a part of the second lateral side surface 15, one of the second main cutting edges 31 extends along the second lateral side surface 15 and along at least a major part of the adjacent central side surface 14, and one of the second surface-wiping cutting edges 32 extends along at least a part of the first lateral side surface 13.

Each first main cutting edge 21 and each second main cutting edge 31 may extend all along the associated central side surface 14.

Each first surface-wiping cutting edge 22 and each second surface-wiping cutting edge 32 preferably extend along at least a major part of the associated second lateral side surface 15 and first lateral side surface 13, respectively, and may extend all along the associated second lateral side surface 15 and first lateral side surface 13, respectively. In the embodiment illustrated in Figs 1a-1g, each one of the first surface-wiping cutting edges 22 and each one of the second surface-wiping cutting edges 32 extend in parallel with the median plane MP or at least essentially in parallel with the median plane MP.

The central side surface 14 of each main side face 11a-11d is slightly depressed in relation to the adjacent first and second lateral side surfaces 13, 15 of the same main side face, which implies that the central side surface 14 of each main side face 11a, 11c in the above-mentioned first pair is located closer to the first transverse plane TP1 as compared to the first and second lateral side surfaces 13, 15 of the same main side face, and that the central side surface 14 of each main side face 11b, 11d in the above-mentioned second pair is located closer to the second transverse plane TP2 as compared to the first and second lateral side surfaces 13, 15 of the same main side face.

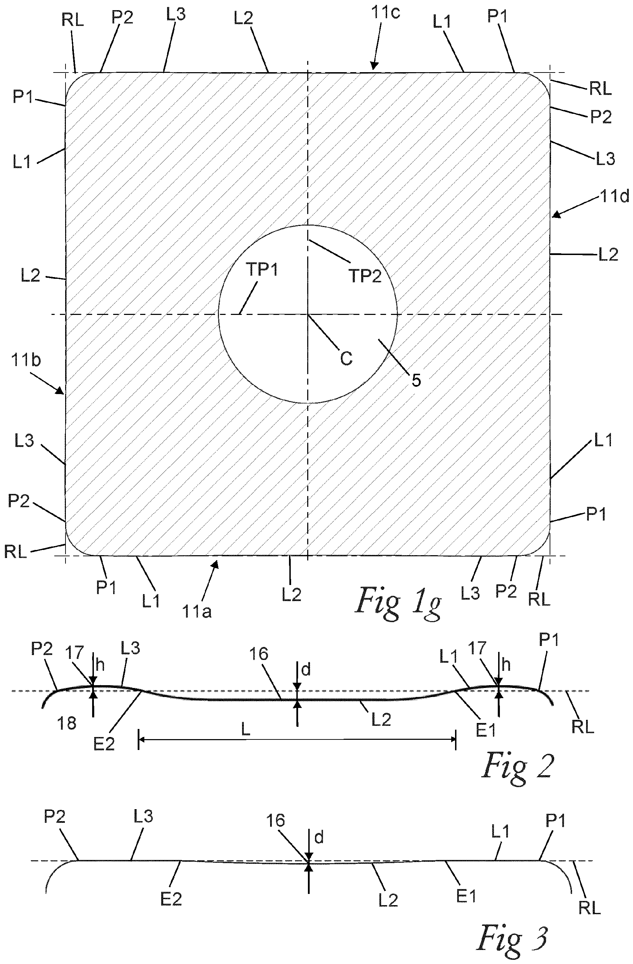

Each one of the main side faces 11a-11d has such a shape that, when seen in a cross-section of the cutting insert 1 taken along the median plane MP, the first lateral side surface 13 of the main side face extends along a first line L1, the central side surface 14 of the main side face extends along a second line L2 and the second lateral side surface 15 of the of the main side face extends along a third line L3, as illustrated in Figs 1g, 2 and 3.

The contour of one of the main side faces 11a-11d of a cutting insert 1 according to two alternative embodiments of the invention, as seen in a cross-section of the cutting insert taken along the median plane MP, is very schematically illustrated in Figs 2 and 3. In order to more clearly illustrate the unique shape of the main side face, the scale of the contour in vertical direction in Figs 2 and 3 has been greatly exaggerated in relation to the scale of the contour in horizontal direction in Figs 2 and 3.

The second line L2 has a first end point E1, through which the second line L2 adjoins to the first line L1, and a second end point E2, through which the second line L2 adjoins to the third line L3, wherein these first and second end points E1, E2 are located on an imaginary straight reference line RL that extends between a first point P1 where the first line L1 adjoins to the one of the corner side faces 12 located adjacent to the first lateral side surface 13 of the main side face and a second point P2 where the third line L3 adjoins to the one of the corner side faces 12 located adjacent to the second lateral side surface 15 of the main side face. The second line L2 is depressed in relation to the imaginary straight reference line RL toward the centre axis C of the cutting insert and has a deepest part 16 at its middle part. The depth d of the second line L2 in relation to the imaginary straight reference line RL is gradually increasing as seen in a direction from said first end point E1 to the deepest part 16 of the second line L2 and is also gradually increasing as seen in a direction from said second end point E2 to the deepest part 16 of the second line L2, wherein the depth d of the deepest part 16 of the second line L2 in relation to the imaginary straight reference line RL is 0,01-0,15 mm, preferably 0,01-0,10 mm.

Each main side face 11a, 11c in the above-mentioned first pair has such a shape that the central side surface 14 of this main side face, as seen in a lateral view of the cutting insert 1 along the first imaginary reference axis A1 toward this main side face, has a length L along the median plane MP corresponding to 35-75%, preferably 45-65%, of the width w of the cutting insert 1 as seen in this lateral view and measured along the median plane MP.

Each one of the main side faces 11a-11d preferably has such a shape that the central side surface 14 of the main side face is tangentially connected to the first lateral side surface 13 of the same main side face and tangentially connected to the second lateral side surface 15 of the same main side face.

The first and second lateral side surfaces 13, 15 of each main side face 11a-11d may be formed as flat surfaces located in essentially the same plane, wherein the above-mentioned first and second lines L1, L3 are both flush with the associated imaginary straight reference line RL, as schematically illustrated in Fig 3. However, the first and second lateral side surfaces 13, 15 of each main side face 11a-11d are with advantage curved, at least along a part of its extension, as seen in a cross-section of the cutting insert taken along the median plane MP, as schematically illustrated in Fig 2. In this case, the first lateral side surface 13 of each main side face 11a-11d has such a shape that at least a part of said first line L1 and at least a part of said third line L3 protrude outwards from the associated imaginary straight reference line RL, wherein the height h of a highest part 17 of the first line L1 and the height h of a highest part 17 of the third line L3 in relation to the associated imaginary straight reference line RL is 0,001-0,02 mm, and wherein the highest part 17 is provided on a convex part 18 (see Figs 1c and 1d) of the first lateral side surface 13 and the second lateral side surface 15, respectively. The second surface-wiping cutting edge 32 associated with the first lateral side surface 13 extends at least along a part of said convex part 18 of the first lateral side surface 13 and preferably beyond said highest part 17 of the first lateral side surface. In a corresponding manner, the first surface-wiping cutting edge 22 associated with the second lateral side surface 15 extends at least along a part of said convex part 18 of the second lateral side surface 15 and preferably beyond said highest part 17 of the second lateral side surface.

The radius of curvature of said convex parts 18 of the first and second lateral side surfaces 13, 15 is:
- at least 25 mm, preferably 25-600 mm, and more preferably 40-100 mm, and/or
2-10 times, preferably 3-7 times, larger that the width w of the cutting insert 1, wherein the width w of the cutting insert is measured along the median plane MP in a lateral view of the cutting insert 1 seen along the first imaginary reference axis A1.

The central side surface 14 of each main side face 11a-11d has at least one concave part 19 (see Figs 1c and 1d) that is concavely shaped as seen in a cross-section of the cutting insert 1 taken along the median plane MP, wherein the radius of curvature of this at least one concave part 19 is:
- 25-200 mm, preferably 50-170 mm, and/or
- 2-16 times, preferably 3-13 times, larger that the width w of the cutting insert as measured along the median plane MP in a lateral view of the cutting insert 1 seen along the first imaginary reference axis A1.

In the embodiment illustrated in Figs 1a-1g, a central part 20 of the central side surface 14 of each main side face 11a-11d is flat or at least essentially flat, wherein this flat central part 20 adjoins to two concave parts 19 of the central side surface 14 located on either side of the central part 20.

Each one of the first and second main cutting edges 21, 31 is preferably inclined toward the median plane MP, as illustrated in Figs 1c and 1d. In this case, each main side face 11a, 11c in the above-mentioned first pair has such a shape:
- that the first main cutting edge 21 on this main side face, as seen in a lateral view of the cutting insert 1 along the first imaginary reference axis A1 toward this main side face (i.e. in the lateral view shown in Fig 1c), is inclined inwards toward the median plane MP as seen in a direction from a first end of this first main cutting edge 21 located at the intersection between the first lateral side surface 13 of this main side face and the first major face 2 toward an opposite second end of this first main cutting edge 21; and
- that the second main cutting edge 31 associated with this main side face, as seen in a lateral view of the cutting insert 1 along the first imaginary reference axis A1 toward this main side face, is inclined inwards toward the median plane MP as seen in a direction from a first end of this second main cutting edge 31 located at the intersection between the second lateral side surface 15 of this main side face and the second major face 3 toward an opposite second end of this second main cutting edge 31.

The first major face 2 comprises a substantially flat first tangential abutment surface 7a and the second major face 3 comprises a substantially flat second tangential abutment surface 7b. In the illustrated embodiment, each first corner cutting edge 23, at least a part of each first surface-wiping cutting edge 22 closest to the adjacent first corner cutting edge 23 and at least a part of each first major cutting edge 21 closest to the adjacent first corner cutting edge 23 are arranged at a longer distance from the median plane MP as compared to the first tangential abutment surface 7a and are consequently located on a higher level than the first tangential abutment surface 7a when the cutting insert 1 is positioned with the first major face 2 facing upwards. In the corresponding manner, each second corner cutting edge 33, at least a part of each second surface-wiping cutting edge 32 closest to the adjacent second corner cutting edge 33 and at least a part of each second major cutting edge 31 closest to the adjacent second corner cutting edge 33 are arranged at a longer distance from the median plane MP as compared to the second tangential abutment surface 7b and are consequently located on a higher level than the second tangential abutment surface 7b when the cutting insert 1 is positioned with the second major face 3 facing upwards.

In the illustrated embodiment, shoulders 8 are provided on the first and second major faces 2, 3, wherein the shoulders 8 on the first major face 2 are located close to and inwardly of a respective one of the first surface-wiping cutting edges 22 and wherein the shoulders 8 on the second major face 3 are located close to and inwardly of a respective one of the second surface-wiping cutting edges 32. Each shoulder 8 has a substantially flat top surface 9. The top surfaces 9 of the shoulders 8 on the first major face 2 are located in a common plane, which is parallel to the median plane MP. The top surfaces 9 of the shoulders 8 on the second major face 3 are also located in a common plane, which is parallel to the median plane MP. The top surfaces 9 of the shoulders 8 on the first major face 2 constitute the highest parts of the first major face, i.e. the parts of the first major face 2 located at the longest distance from the median plane MP. In the corresponding manner, the top surfaces 9 of the shoulders 8 on the second major face 3 constitute the highest parts of the second major face, i.e. the parts of the second major face 3 located at the longest distance from the median plane MP. Thus, in this case, the tangential abutment surface 7a, 7b on each one of the first and the second major faces 2, 3 is located at a lower level than the top surfaces 9 of the shoulders 8 on the same major face, i.e. inwardly of an imaginary plane that is flush with the top surfaces 9 of the shoulders 8 on the same major face.

Figs 5a-5f illustrate a milling tool 50 in the form of an end mill tool, which for instance may be used for square-shoulder milling or face milling. The milling tool 50 comprises a tool body 51 and is configured to be rotated about an axis of rotation 52. The tool body 51 has a rear end 51a and an opposite front end 51b. A longitudinal axis 53 of the tool body 51 extends between the rear end 51a and the front end 51b of the tool body, wherein this longitudinal axis 53 coincides with the axis of rotation 52 of the milling tool 50. At the rear end 51a, the tool body 51 is to be mounted to a rotating spindle or the similar of a milling machine, for instance via a tool holder. At the front end 51b, the tool body 51 is provided with insert seats 54 configured to receive cutting inserts 1. In the illustrated example, the tool body 51 is provided with eight insert seats 54, which are evenly distributed about the longitudinal axis 53 of the tool body and which are configured to receive a respective cutting insert 1. However, the tool body 51 may as an alternative, inter alia depending on the diameter of the tool body, be provided with any other suitable number of insert seats 54. A smaller diameter tool body may for instance be provided with two insert seats, whereas a larger diameter tool body may be provided with more than eight insert seats.

A cutting insert 1 is mounted in each one of the insert seats 54 in the tool body 51. In the embodiment illustrated in Figs 5a-5f, the milling tool 50 is provided with cutting inserts 1 of the type illustrated in Figs 1a-1g. Each cutting insert 1 is configured to be releasably mounted to the associated insert seat 54. Each insert seat 54 is provided with a flat tangential support surface 56. Each cutting insert 1 could be designed with tangential abutment surfaces on the first and second major faces 2, 3 configured for direct contact with the tangential support surface 56 in the associated insert seat 54. However, in the illustrated embodiment, a shim plate 40 is arranged between the tangential support surface 56 and the cutting insert 1. This shim plate 40 is detachably fixed against the tangential support surface 56 by means of a tubular screw 41, which extends through a through hole 42 in the shim plate 40 and is engaged in a threaded hole 55 in the tangential support surface 56 in the insert seat. In the illustrated embodiment, each cutting insert 1 is fixed to the associated insert seat 54 by means of a fastening element 6 in the form of a screw, which extends through the through hole 5 in the cutting insert 1 and is engaged in a threaded hole 43 in the tubular screw 41 of the shim plate 40 that is mounted in the insert seat. As described above, each cutting insert 1 is provided with a flat tangential abutment surface 7a, 7b on each one of the first and second major faces 2, 3, wherein the tangential abutment surface 7a, 7b on the major face 2, 3 presently facing the shim plate 40 is configured to abut against flat tangential support surfaces 44 on the shim plate 40 when the cutting insert 1 is mounted in the insert seat 54 in one of its working positions.

Each insert seat 54 is also provided with a radial support surface 57 and an axial support surface 58.

In each one of the different working positions of the cutting insert 1, the first and second lateral side surfaces 13, 15 of one of the main side faces 11a-11d are configured to jointly serve as axial abutment surfaces of the cutting insert and abut against the axial support surface 58 in the associated insert seat 54, at the same time as the first and second lateral side surfaces 13, 15 of another one of the main side faces 11a-11d are configured to jointly serve as radial abutment surfaces of the cutting insert and abut against the radial support surface 57 in the associated insert seat 54.

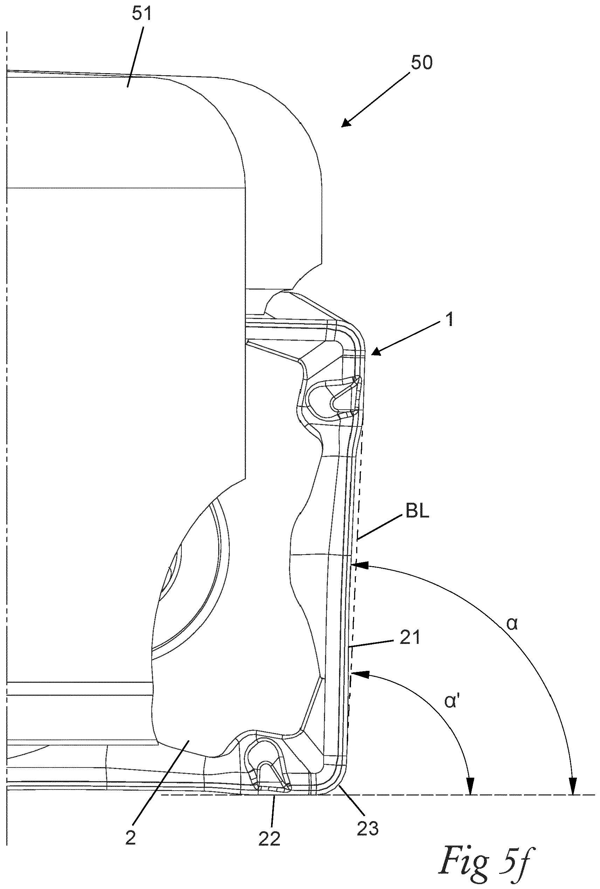

Fig 5f shows a part of a cutting insert 1 of the type illustrated in Figs 1a-1g mounted in an insert seat 54 of the milling tool 50 in one of its eight working positions. Thus, the cutting insert 1 illustrated in Fig 5f has a slightly depressed central side surface 14 on each one of the main side faces 11a-11d. The approximate position of the active main cutting edge of a corresponding cutting insert with flat main side faces is illustrated with a broken line BL in Fig 5f. It can be seen in Fig 5f that the entering angle α is very close to 90° with a cutting insert 1 of the type illustrated in Figs 1a-1g and that the entering angle α' would deviate more from the desired 90° value with a corresponding cutting insert with conventional flat main side faces.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A double-sided negative cutting insert for use in milling, the cutting insert (1) having an essentially quadratic basic shape and being turnable into eight different working positions and comprising:
- first and second major faces (2, 3) arranged on opposite sides of the cutting insert (1) and serving as top and bottom faces of the cutting insert, wherein the cutting insert (1) has a centre axis (C) that extends between the first and second major faces (2, 3) and a median plan (MP) that extends halfway between the first and second major faces (2, 3) perpendicularly to the centre axis (C), and wherein the cutting insert (1) has 90° rotational symmetry about the centre axis (C);
- a peripheral surface (10) extending around the cutting insert (1) between the first and second major faces (2, 3) substantially perpendicularly to the median plane (MP) and comprising:
• four main side faces (11a-11d), a first pair of which being arranged opposite to each other on two opposite sides of the cutting insert (1) and a second pair of which being arranged opposite to each other on two other opposite sides of the cutting insert (1), wherein the cutting insert (1) has a first transverse plane (TP1) that extends halfway between the two main side faces (11a-11d) in said first pair and contains the centre axis (C) of the cutting insert and a second transverse plane (TP2) that extends halfway between the two main side faces (11a-11d) in said second pair and contains the centre axis (C) of the cutting insert, and wherein each main side face (11a, 11c) in said first pair has 180° rotational symmetry about a first imaginary reference axis (A1) that extends along a line of intersection between the median plane (MP) and the second transverse plane (TP2) and each main side face (11b, 11d) in said second pair has 180° rotational symmetry about a second imaginary reference axis (A2) that extends along a line of intersection between the median plane (MP) and the first transverse plane (TP1), and
• four corner side faces (12), each of which being arranged between two adjacent main side faces (11a-11d);
- four first main cutting edges (21) formed at an intersection between a respective one of the four main side faces (11a-11d) and the first major face (2);
- four second main cutting edges (31) formed at an intersection between a respective one of the four main side faces (11a-11d) and the second major face (3);
- four first surface-wiping cutting edges (22) formed at an intersection between a respective one of the four main side faces (11a-11d) and the first major face (2);
- four second surface-wiping cutting edges (32) formed at an intersection between a respective one of the four main side faces (11a-11d) and the second major face (3);
- four first curved corner cutting edges (23) formed at an intersection between a respective one of the four corner side faces (12) and the first major face (2), wherein each one the first curved corner cutting edges (23) is located between one of the first main cutting edges (21) and one of the first surface-wiping cutting edges (22); and
- four second curved corner cutting edges (33) formed at an intersection between a respective one of the four corner side faces (12) and the second major face (3), wherein each one the second curved corner cutting edges (33) is located between one of the second main cutting edges (31) and one of the second surface-wiping cutting edges (32),
**characterized in:**
- **that** each one of the main side faces (11a-11d) comprises a central side surface (14) that extends between the first and second major faces (2, 3), a first lateral side surface (13) that extends between the first and second major faces (2, 3) and adjoins to one of the four corner side faces (12) and a second lateral side surface (15) that extends between the first and second major faces (2, 3) and adjoins to another one of the four corner side faces (12), the first lateral side surface (13), the central side surface (14) and the second lateral side surface (15) being arranged one after the other with the central side surface (14) located between the first lateral side surface (13) and the second lateral side surface (15), wherein:
• one of the first main cutting edges (21) extends along the first lateral side surface (13) and along at least a major part of the central side surface (14),
• one of the first surface-wiping cutting edges (22) extends along at least a part of the second lateral side surface (15),
• one of the second main cutting edges (31) extends along the second lateral side surface (15) and along at least a major part of the central side surface (14), and
• one of the second surface-wiping cutting edges (32) extends along at least a part of the first lateral side surface (13); and
- **that** when seen in a cross-section of the cutting insert taken along the median plane (MP), each one of the main side faces (11a-11d) is arranged such that the first lateral side surface (13) of the main side face extends along a first line (L1), the central side surface (14) of the main side face extends along a second line (L2) and the second lateral side surface (15) of the of the main side face extends along a third line (L3), wherein:
• the second line (L2) has a first end point (E1), through which the second line (L2) adjoins to the first line (L1), and a second end point (E2), through which the second line (L2) adjoins to the third line (L3), these first and second end points (E1, E2) being located on an imaginary straight reference line (RL) that extends between a first point (P1) where the first line (L1) adjoins to the corner side face (12) adjacent to the first lateral side surface (13) of the main side face and a second point (P2) where the third line (L3) adjoins to the corner side face (12) adjacent to the second lateral side surface (15) of the main side face,
• the second line (L2) is depressed in relation to the imaginary straight reference line (RL) toward the centre axis (C) of the cutting insert and has a deepest part (16) at its middle part, and
• a depth (d) of the second line (L2) in relation to the imaginary straight reference line (RL) is gradually increasing as seen in a direction from said first end point (E1) to the deepest part (16) of the second line (L2) and as seen in a direction from said second end point (E2) to the deepest part (16) of the second line (L2), the depth (d) of the deepest part (16) of the second line (L2) in relation to the imaginary straight reference line (RL) being 0,01-0,15 mm, preferably 0,01-0,10 mm.

2. A double-sided negative cutting insert according to claim 1, **characterized in that** each one of the main side faces (11a-11d) has such a shape that the central side surface (14) of the main side face is tangentially connected to the first lateral side surface (13) of the main side face and tangentially connected to the second lateral side surface (15) of the main side face.

3. A double-sided negative cutting insert according to claim 1 or 2, **characterized in that** each main side face (11a, 11c) in said first pair has such a shape that the central side surface (14) of this main side face, as seen in a lateral view of the cutting insert (1) along the first imaginary reference axis (A1) toward this main side face (11a, 11c), has a length (L) along the median plane (MP) corresponding to 35-75%, preferably 45-65%, of a width (w) of the cutting insert (1) as seen in this lateral view and measured along the median plane (MP).

4. A double-sided negative cutting insert according to any of claims 1-3, **characterized in:**
- **that** the first lateral side surface (13) of each main side face (11a-11d) has such a shape that at least a part of said first line (L1) protrudes outwards from the associated imaginary straight reference line (RL), wherein a height (h) of a highest part (17) of the first line (L1) in relation to the associated imaginary straight reference line (RL) is 0,001-0,02 mm, and wherein this highest part (17) is provided on a convex part (18) of the associated first lateral side surface (13); and
- **that** the second lateral side surface (15) of each main side face (11a-11d) has such a shape that at least a part of said third line (L3) protrudes outwards from the associated imaginary straight reference line (RL), wherein a height (h) of a highest part (17) of the third line (L3) in relation to the associated imaginary straight reference line (RL) is 0,001-0,02 mm, and wherein this highest part (17) is provided on a convex part (18) of the associated second lateral side surface (15).

5. A double-sided negative cutting insert according to claim 4, **characterized in:**
- **that** the second surface-wiping cutting edge (32) associated with the first lateral side surface (13) of each main side face (11a-11d) extends at least along a part of said convex part (18) of this first lateral side surface (13) and preferably beyond said highest part (17) of this first lateral side surface; and
- **that** the first surface-wiping cutting edge (22) associated with the second lateral side surface (15) of each main side face (11a-11d) extends at least along a part of said convex part (18) of this second lateral side surface (15) and preferably beyond said highest part (17) of this second lateral side surface.

6. A double-sided negative cutting insert according to claim 4 or 5, **characterized in:**
- **that** the radius of curvature of said convex part (18) of the first lateral side surface (13) is at least 25 mm, preferably 25-600 mm, and more preferably 40-100 mm; and
- **that** the radius of curvature of said convex part (18) of the second lateral side surface (15) is at least 25 mm, preferably 25-600 mm, and more preferably 40-100 mm.

7. A double-sided negative cutting insert according to any of claims 4-6, **characterized in:**
- **that** the radius of curvature of said convex part (18) of the first lateral side surface (13) is 2-10 times, preferably 3-7 times, larger that a width (w) of the cutting insert (1); and
- **that** the radius of curvature of said convex part (18) of the second lateral side surface (15) is 2-10 times, preferably 3-7 times, larger that the width (w) of the cutting insert (1), wherein the width (w) of the cutting insert is measured along the median plane (MP) in a lateral view of the cutting insert (1) seen along the first imaginary reference axis (A1).

8. A double-sided negative cutting insert according to any of claims 1-3, **characterized in:**
- **that** the first lateral side surface (13) of each main side face (11a-11d) has such a shape that said first line (L1) is flush with the associated imaginary straight reference line (RL); and
- **that** the second lateral side surface (15) of each main side face (11a-11d) has such a shape that said third line (L3) is flush with the associated imaginary straight reference line (RL).

9. A double-sided negative cutting insert according to any of claims 1-8, **characterized in that** the central side surface (14) of each main side face (11a-11d) has at least one concave part (19) that is concavely shaped as seen in a cross-section of the cutting insert (1) taken along the median plane (MP).

10. A double-sided negative cutting insert according to claim 9, **characterized in that** the radius of curvature of said concave part (19) is:
- 25-200 mm, preferably 50-170 mm, and/or
- 2-16 times, preferably 3-13 times, larger that a width (w) of the cutting insert (1) as measured along the median plane (MP) in a lateral view of the cutting insert (1) seen along the first imaginary reference axis (A1).

11. A double-sided negative cutting insert according to any of claims 1-10, **characterized in:**
- **that** each first surface-wiping cutting edge (22) extends along at least a major part of the associated second lateral side surface (15); and
- **that** each second surface-wiping cutting edge (32) extends along at least a major part of the associated first lateral side surface (13).

12. A double-sided negative cutting insert according to any of claims 1-11, **characterized in that** each main side face (11a, 11c) in said first pair has such a shape:
- that the first main cutting edge (21) associated with this main side face, as seen in a lateral view of the cutting insert (1) along the first imaginary reference axis (A1) toward this main side face (11a, 11c), is inclined inwards toward the median plane (MP) as seen in a direction from a first end of this first main cutting edge (21) located at an intersection between the first lateral side surface (13) of this main side face and the first major face (2) toward an opposite second end of this first main cutting edge (21); and
- that the second main cutting edge (31) associated with this main side face, as seen in a lateral view of the cutting insert (1) along the first imaginary reference axis (A1) toward this main side face (11a, 11c), is inclined inwards toward the median plane (MP) as seen in a direction from a first end of this second main cutting edge (31) located at an intersection between the second lateral side surface (15) of this main side face and the second major face (3) toward an opposite second end of this second main cutting edge (31).

13. A double-sided negative cutting insert according to any of claims 1-12, **characterized in that** each main side face (11a, 11c) in said first pair has such a shape:
- that the first main cutting edge (21) associated with this main side face, as seen in a lateral view of the cutting insert (1) along the first imaginary reference axis (A1) toward this main side face (11a, 11c), is inclined inwards toward the median plane (MP) such that it approaches the median plane (MP)
at least along a part of this first main cutting edge (21) formed at an intersection between the first lateral side surface (13) of this main side face and the first major face (2), and/or
at least along a part of this first main cutting edge (21) formed at an intersection between the central side surface (14) of this main side face and the first major face (2),
when moving from one corner side face of the four corner side faces (12) that adjoins to the first lateral side surface (13) of this main side face in a direction toward one corner side face of the four corner side faces (12) that adjoins to the second lateral side surface (15) of this main side face; and
- that the second main cutting edge (31) associated with this main side face, as seen in a lateral view of the cutting insert (1) along the first imaginary reference axis (A1) toward this main side face (11a, 11c), is inclined inwards toward the median plane (MP) such that it approaches the median plane (MP)
at least along a part of this second main cutting edge (31) formed at an intersection between the second lateral side surface (15) of this main side face and the second major face (3), and/or
at least along a part of this second main cutting edge (31) formed at an intersection between the central side surface (14) of this main side face and the second major face (3),
when moving from one corner side face of the four corner side faces (12) that adjoins to the second lateral side surface (15) of this main side face in a direction toward one corner side face of the four corner side faces (12) that adjoins to the first lateral side surface (13) of this main side face.

14. A double-sided negative cutting insert according to any of claims 1-13, **characterized in:**
- **that** each one of the first surface-wiping cutting edges (22) extends essentially in parallel with the median plane (MP); and
- **that** each one of the second surface-wiping cutting edges (32) extends essentially in parallel with the median plane (MP).

15. A double-sided negative cutting insert according to any of claims 1-14, **characterized in that** the cutting insert (1) is provided with a through hole (5), which extends centrally through the cutting insert between the first and second major faces (2, 3), wherein a centre axis of the through hole (5) coincides with the centre axis (C) of the cutting insert (1).

16. A double-sided negative cutting insert according to any of claims 1-15, **characterized in:**
- **that** the first major face (2) comprises a substantially flat first tangential abutment surface (7a), wherein each first corner cutting edge (23), at least a part of each first surface-wiping cutting edge (22) closest to the adjacent first corner cutting edge (23) and at least a part of each first major cutting edge (21) closest to the adjacent first corner cutting edge (23) are arranged further from the median plane (MP) than the first tangential abutment surface (7a); and
- **that** the second major face (3) comprises a substantially flat second tangential abutment surface (7b), wherein each second corner cutting edge (33), at least a part of each second surface-wiping cutting edge (32) closest to the adjacent second corner cutting edge (33) and at least a part of each second major cutting edge (31) closest to the adjacent second corner cutting edge (33) are arranged further from the median plane (MP) than the second tangential abutment surface (7b).

17. A double-sided negative cutting insert according to any of claims 1-16, **characterized in that**, in each one of the different working positions of the cutting insert (1), the first and second lateral side surfaces (13, 15) of one of the main side faces (11a-11d) are configured to jointly serve as axial abutment surfaces of the cutting insert (1) at the same time as the first and second lateral side surfaces (13, 15) of another one of the main side faces (11a-11d) are configured to jointly serve as radial abutment surfaces of the cutting insert (1).

18. A double-sided negative cutting insert according to any of claims 1-17, **characterized in that** the cutting insert (1) is a square-shoulder milling insert or a face milling insert.

19. A milling tool comprising at least one double-sided negative cutting insert (1) according to any of claims 1-18.
